# EUROPÄISCHE PATENTSCHRIFT

(11) **EP 0 601 536 B1**
(45) Veröffentlichungstag und Bekanntmachung des Hinweises auf die Patenterteilung: **20.03.2002**
(21) Anmeldenummer: 93119690.1
(22) Anmeldetag: 07.12.1993
(51) Int. Cl.: C08F 283/06, C08F 8/32, C08F 8/14, C04B 24/32

(54) **Verfahren zur Herstellung von wasserlöslichen Pfropfpolymeren**
Process for the preparation of water-soluble graft polymers
Procédé de préparation de polymères greffés hydrosolubles

(30) Priorität: 08.12.1992 DE 4241295
(43) Veröffentlichungstag der Anmeldung: 15.06.1994
(73) Patentinhaber: SKW Polymers GmbH, 83308 Trostberg (DE)
(72) Erfinder: Wutz, Konrad, Dr., D-83308 Trostberg (DE); Weichmann, Josef, Dr., D-84568 Pleiskirchen (DE); Kern, Alfred, Dr., D-84558 Kirchweidach (DE); Rosenbauer, Hans-Günter, Dr., D-83308 Trostberg (DE)
(74) Vertreter: Huber, Bernhard, Dipl.-Chem.

(56) Entgegenhaltungen:
- EP-A- 0 271 435
- BE-A- 674 488
- US-A- 4 146 488

## Beschreibung

Gegenstand der vorliegenden Erfindung ist ein Verfahren zur Herstellung wasser-Pfropfpolymere und deren Verwendung als Dispergiermittel für löslicher Wasser enthaltende anorganische Bindemittel oder wäßrige Tonsuspensionen, als Luftporenbildner oder Erstarrungsverzögerer für Mörtel oder Beton, sowie als Retentionsmittel für wäßrige Systeme.

Die in der Polymerisationstechnik wohlbekannte Verbindungsklasse der Pfropfpolymere besteht aus einer Hauptkette ("backbone"), auf die Monomere als Seitenäste in unregelmäßigen Abständen aufgepfropft werden. Zur Bildung der Hauptkette werden sehr oft Polyalkylenglykole herangezogen, weil CH-Bindungen in Nachbarschaft zu einer CO-Ether-Bindung aktiviert sind und dadurch radikalisch substituiert werden können. Pfropfpolymere, welche durch radikalische Pfropfung eines Polyalkylenglykols mit einem ethylenisch ungesättigten Carbonsäurederivat hergestellt worden sind, sind bereits aus dem Stand der Technik bekannt.

So wird beispielsweise in der US-PS 4,460,738 bereits die Herstellung von carbonsäurehaltigen Polyurethan-Prepolymeren beschrieben, die durch radikalische Pfropfung von ethylenisch ungesättigten Dicarbonsäuren auf Polyalkylenglykole und durch anschließende Reaktion mit Polyisocyanaten erhalten werden.

Gemäß der US-PS 4,528,334 wird Acrylsäure auf Polyoxyalkylenglykole gepfropft und das hierbei entstehende Pfropfpolymere als Gleitmittel verwendet.

Schließlich sind aus der EP-A 271 435 Pfropfpolymere bekannt, wobei ethylenisch ungesättigte Monomere, wie z.B. Acrylsäure-Derivate, auf Polyalkylenglykole aufgepfropft werden. Die auf diese Weise hergestellten Pfropfpolymere eignen sich als Verflüssiger in zementhaltigen Zusammensetzungen.

Die anwendungstechnischen Eigenschaften dieser Produkte sind jedoch nicht zufriedenstellend, weil zum einen diese Pfropfpolymere stark luftporeneinführende Eigenschaften besitzen und außerdem die mit diesem Verflüssiger hergestellten Betonprodukte noch keine optimalen Druckfestigkeiten aufweisen.

Der vorliegenden Erfindung lag daher die Aufgabe zugrunde, ein Verfahren zur Herstellung wasserlöslicher Pfropfpolymere zu entwickeln, welche die genannten Nachteile des Standes der Technik nicht aufweisen, technisch relativ einfach durchzuführen ist und Polymere liefert, die gute anwendungstechnische Eigenschaften besitzen.

Diese Aufgabe wurde erfindungsgemäß durch die Herstellung wasserlöslicher Pfropfpolymere entsprechend Anspruch 1 gelöst. Es hat sich nämlich überraschenderweise gezeigt, daß man durch die Derivatisierung der bereits bekannten Pfropfpolymere die anwendungstechnischen Eigenschaften dieser Produkte, insbesondere beim Einsatz als Dispergiermittel für Wasser enthaltende anorganische Bindemittel, entscheidend verbessern kann.

Das erfindungsgemäße Verfahren zur Herstellung wasserlöslicher Pfropfpolymere umfaßt mindestens zwei Stufen. In der ersten Reaktionsstufe erfolgt die radikalische Pfropfung eines Polyalkylenoxids der allgemeinen Formel (I) 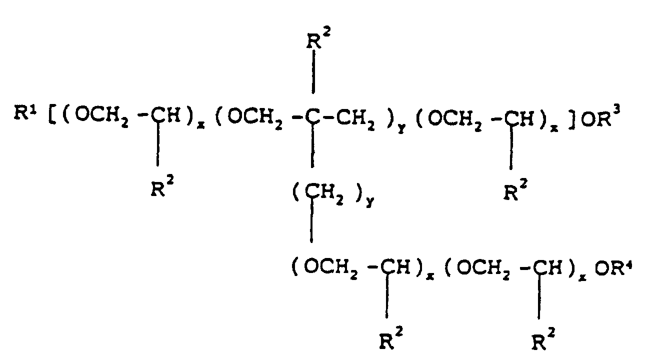 in der
- R¹ =: -H, -CₙH₂ₙ₊₁, -C₆H₄-CₙH₂ₙ₊₁, 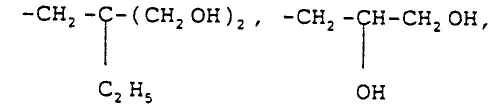 -(CH-R²)ₘNHR²,-(CH-R²)ₘOH, -(CH-R²)ₘ-COOH, -CO-R⁵
- R² =: -H, -CH₃, -C₂H₅
- R³ =: -H, -CₙH₂ₙ₊₁, -CₘH₂ₘ-SO₃Na, -(CH-R²)ₘNHR², -(CH-R²)ₘOH, -(CH-R²)ₘ-COOH, -CO-R⁵
- R⁴ =: -H, -(CH-R²)ₘ-COOH, -CO-R⁵
- R⁵ =: -CₘH₂ₘ₊₁, -C₆H₅, -(CH-R²)ₘ-COOH, -C₆H₄-COOH
n = 1 - 18 m = 1 - 5 x = 2 - 200 y = 0 oder 1 bedeuten
mit einer ethylenisch ungesättigten Mono- oder Dicarbonsäure bzw. deren Anhydrid.

Bei den erfindungsgemäß eingesetzten Polyalkylenoxiden, welche die Hauptkette der Pfropfpolymeren bilden, können die Alkylen-Reste völlig linear (R² = H), wie z.B. beim Polyethylenglykol, oder aber verzweigt sein (R² = CH₃, C₂H₅), wie z.B. beim Polypropylenglykol. Als bevorzugt sind Polyethylenglykol, Polypropylenglykol, Polyethylentriol sowie Polypropylentriol oder deren Mischpolymerisate anzusehen. Die Polyalkylenoxide können vorzugsweise am Anfang oder am Ende der Kette mit aliphatischen oder araliphatischen Resten verethert sein, wobei die entsprechenden aliphatischen Reste aus 1 bis 18 Kohlenstoffatomen bestehen. Die aliphatischen Reste können außerdem noch funktionelle Gruppen, wie z.B. Hydroxyl-, Sulfonat-, Amino- oder Carboxyl-Funktionen aufweisen.

Es ist im Rahmen der vorliegenden Erfindung auch möglich, die freien OH-Gruppen der Polyalkylenoxide vor der Pfropfung durch Umsetzung mit entsprechenden Säurechloriden oder -anhydriden zu acylieren, wobei vorzugsweise als Acylierungsmittel auf die technisch wichtigen Carbonsäureanhydride von Monocarbonsäuren, wie z.B. Essigsäureanhydrid, Propionsäureanhydrid, oder Dicarbonsäuren, wie z.B. Bernsteinsäureanhydrid, Glutarsäureanhydrid oder Phthalsäureanhydrid zurückgegriffen werden kann. Die Acylierung kann auch mit den entsprechenden Säurechloriden, wie z.B. Benzoylchlorid problemlos durchgeführt werden.

Auf diese Polyalkylenoxide werden dann ethylenisch ungesättigte Mono- oder Dicarbonsäuren bzw. deren Anhydride aufgepfropft, welche somit die Seitenäste der entsprechenden Pfropfpolymere bilden. Als ethylenisch ungesättigte Mono- oder Dicarbonsäuren können sowohl aliphatische Derivate wie z.B. Acrylsäure, Methacrylsäure, Maleinsäure, Fumarsäure oder Itaconsäure als auch cyclische Derivate wie z.B. Tetrahydrophthalsäure eingesetzt werden. Vorzugsweise werden anstelle der Mono- oder Dicarbonsäure auch deren Anhydrid wie z.B. Maleinsäureanhydrid oder Itaconsäureanhydrid verwendet.

Das Gewichtsverhältnis von Polyalkylenoxid zu der ethylenisch ungesättigten Mono- oder Dicarbonsäure bzw. deren Anhydrid kann in weiten Grenzen variiert werden. Vorzugsweise werden diese Ausgangsverbindungen jedoch in einer solchen Menge eingesetzt, daß deren Gewichtsverhältnis im Bereich von 98:2 bis 20:80 liegt.

Die Pfropfpolymerisation selbst ist relativ unkritisch und kann nach den üblichen Methoden und mit den bekannten radikalischen Startern problemlos durchgeführt werden. Als Starter eignen sich Peroxyverbindungen, Azoverbindungen und Redox-Initiatoren, wie sie dem Fachmann für radikalische Additionsreaktionen bekannt sind. Typische Beispiele sind TBPTH, TBPEH, DCP, DDEPH. Die Polymerisation selbst wird vorzugsweise bei einer Temperatur von 50 bis 180°C durchgeführt und richtet sich im wesentlichen nach der Zersetzungstemperatur des eingesetzten Starters.

Im Anschluß an die Pfropfpolymerisation können die Carbonsäure- oder Anhydridfunktionen durch Umsetzung mit Basen teilweise in die Salzform übergeführt werden. Diese Verseifungsreaktion empfiehlt sich besonders dann, wenn bei der Pfropfung Carbonsäureanhydride eingesetzt worden sind. Sie kann mit den üblichen basisch wirkenden Substanzen wie z.B. Alkali, Erdalkali oder Ammoniak vorgenommen werden. Je nach dem gewünschten Verseifungsgrad werden vorzugsweise 0,5 bis 2 Mol Base, bezogen auf die eingesetzte Mono- oder Dicarbonsäure, verwendet. Es ist auch möglich, die basischen Verbindungen zu einem späteren Zeitpunkt, d.h. während oder nach der Derivatisierung zuzusetzen, wobei der pH-Wert der Pfropfpolymere vorzugsweise auf ca. 7,0 bis 8,5 eingestellt wird.

Es ist erfindungswesentlich, daß im Anschluß an die Pfropfpolymerisation eine Derivatisierung der Säurefunktionen durch Umsetzung mit einem primären oder sekundären Amin und/oder Alkohol vorgenommen wird. Für die Derivatisierung können im Prinzip alle primären oder sekundären Amine eingesetzt werden, die vorzugsweise einen aliphatischen, araliphatischen, aromatischen oder heterocyclischen Rest aufweisen. Die aliphatischen Reste können hierbei gesättigt oder ungesättigt, linear oder verzweigt sein, wobei die Kohlenwasserstoffreste vorzugsweise 1 bis 18 Kohlenstoffatome besitzen. Außer den aliphatischen Aminen können auch aromatische Derivate wie z.B. Anilin, cyclische Derivate wie z.B. Piperidin oder heterocyclische Derivate wie z.B. Morpholin eingesetzt werden. Es ist außerdem möglich, daß die Reste des primären oder sekundären Amins noch funktionelle Gruppen tragen wie z.B. -OH, -OR, -NH₂, -NR²₂, -SO₃H, -SO₃Na, -COOH, -COONa usw.. Bevorzugte Amine mit solchen funktionellen Gruppen sind beispielsweise Sulfanilsäure, 2-Aminoethansulfonsäure sowie Glutaminsäure bzw. deren Salze. Insbesondere können auch polyfunktionelle Amine wie z.B. Ethylendiamin, Diethylentriamin oder Triethylentetramin als Aminkomponente verwendet werden.

Anstelle der Amine können für die Derivatisierung auch primäre oder sekundäre Alkohole eingesetzt werden, die vorzugsweise aliphatische, araliphatische, cyclische oder aromatische Reste aufweisen. Der aliphatische Rest kann hier ebenfalls gesättigt oder ungesättigt, linear oder verzweigt sein, und insbesondere Kohlenwasserstoffreste mit 1 bis 18 Kohlenstoffatomen aufweisen.

Die entsprechenden primären oder sekundären Alkohole können, wie bei der Aminkomponente beschrieben, außerdem noch funktionelle Gruppen tragen, wie z.B. Hydroxyl-, Alkoxy-, Amino-, Carboxyl- oder Sulfonsäuregruppen. An die Stelle der betreffenden Säuren können natürlich ohne weiteres auch die entsprechenden Salze treten.

Im Rahmen der vorliegenden Erfindung können auch cyclische A1kohole wie z.B. Cyclopentanol oder Cyclohexanol sowie aromatische Alkohole, wie z.B. Phenol eingesetzt werden. Gemäß einer bevorzugten Ausführungsform werden als Alkoholkomponente Polyalkylenglykolmonoalkylether 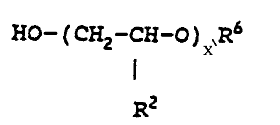 verwendet, wobei x^{'} = 1 bis 100 und R⁶ = -C_{n'}H_{2n'+1}, -C₆H₄-C_{n'}H_{2n'+1} mit n' = 1 - 10 darstellt. Mit Hilfe dieser Alkoholkomponente werden die entsprechenden Pfropfpolymeren sogar bei Raumtemperatur ohne weiteres dünnflüssig und somit leicht rührbar. Außerdem wird die Wasserlöslichkeit durch die Einführung weiterer Ethylenoxidgruppen deutlich erhöht.

Die Menge an der für die Derivatisierung erforderlichen Alkohol- und/oder Aminkomponente richtet sich im wesentlichen nach der Menge der eingesetzten Carbonsäurederivate. Vorzugsweise wird die Amin- oder Alkoholkomponente in einer solchen Menge eingesetzt, daß das Molverhältnis von ethylenisch ungesättigter Mono- oder Dicarbonsäure bzw. deren Anhydrid zu primärem oder sekundärem Amin bzw. Alkohol im Bereich von 99:1 bis 50:50 liegt.

Die Reaktionsbedingungen für den Derivatisierungsschritt (Stufe b) sind relativ unkritisch und hängen weitgehend von der Art der eingesetzten Ausgangskomponenten ab.

Je nach Viskosität des entsprechenden Pfropfpolymers kann die Derivatisierung entweder lösemittelfrei, in einem organischen Lösemittel (wie z.B. DMF) oder aber vorzugsweise in Wasser durchgeführt werden, wobei in einem weiten Temperaturbereich von 20 bis 200°C gearbeitet werden kann.

Da auch nach dieser Derivatisierung die Pfropfpolymere noch einen gewissen Anteil an ethylenisch ungesättigten Gruppen der Carbonsäurederivate, z.B. in Form von Estern enthalten, ist es im Rahmen der vorliegenden Erfindung auch möglich, zusätzlich eine radikalische oder nucleophile Addition an diese restlichen ethylenisch ungesättigten Gruppen der Carbonsäurederivate vorzunehmen. Die nucleophile Addition wird hierbei vor oder nach der Derivatisierung vorzugsweise durch Umsetzung mit Alkalisulfiten, wie z.B. Natriumsulfit, Natriumbisulfit o.ä. durchgeführt.

Die radikalische Addition, die mit den üblichen Startern (Initiatoren) initiiert werden kann, wird vorzugsweise mit Vinyl- oder Acryl-Derivaten vorgenommen, wobei sich bei den Vinyl-Derivaten besonders gut N-Vinylpyrrolidon, Vinylsulfonsäure oder Styrol erwiesen haben. Bei den Acryl-Derivaten sind Acrylsäure, Acrylsäureamid oder Acrylsäureester oder die entsprechenden Methacrylsäure-Derivate als bevorzugt anzusehen, doch kann ohne weiteres auch auf andere Acrylsäure-Derivate zurückgegriffen werden. Als Starter eignen sich Peroxyverbindungen, Azoverbindungen und Redox-Initiatoren, wie sie dem Fachmann für radikalische Additionsreaktionen bekannt sind. Typische Beispiele sind TBPTH, TBPEH, DCP, DDEPH.

Die Menge an den für die radikalische oder nucleophile Addition eingesetzten Reagenzien hängt natürlich im wesentlichen von der Anzahl der restlichen ethylenisch ungesättigten Gruppen in den jeweiligen Pfropfpolymeren ab. Vorzugsweise werden diese Reagenzien in einer Menge von 0,1 bis 50 Mol-%, bezogen auf die Menge der ursprünglich eingesetzten ethylenisch ungesättigten Mono- bzw. Dicarbonsäuren oder deren Anhydriden, verwendet.

Es hat sich als besonders vorteilhaft erwiesen, diese radikalische oder nucleophile Addition in wäßrigem Medium bei einer Temperatur von 20 bis 120°C durchzuführen.

Die erfindungsgemäß hergestellten Pfropfpolymere können je nach Art der Herstellungsmethode bzw. Aufarbeitung als Pulver, mehr oder weniger hochviskose Flüssigkeit oder als wäßrige Lösung anfallen. Diese Produkte weisen eine gute Wasserlöslichkeit auf und besitzen eine Viskosität von 2,0 bis 100,0 cSt (bei 20°C und Feststoffgehalt 20 %).

Die erfindungsgemäß hergestellten Pfropfpolymere eignen sich insbesondere als Dispergiermittel für Wasser enthaltende anorganische Bindemittel wie z.B. Zement, Gips und Anhydrit oder Tiefbohrzementschlämme. Als Zemente kommen hierbei vor allem Portlandzement, Hochofenzement und Aluminatzement (beispielsweise für Feuerfestmassen) in Betracht. Zu diesem Zweck werden diese Pfropfpolymere vorzugsweise in Form einer wäßrigen Lösung mit einem Feststoffgehalt von 20 bis 60 Gew.-% eingesetzt. Besonders gut eignen sich die erfindungsgemäße hergestellten Pfropfpolymere hierbei als Verflüssiger für Zement enthaltende Mischungen wie z.B. Mörtel oder Beton, wobei diese Mischungen gegebenenfalls noch Zuschlagstoffe sowie andere Zusatzmittel, beispielsweise Luftporenbildner, Verflüssiger, Beschleuniger oder Verzögerer enthalten können. Die erfindungsgemäß hergestellten Pfropfpolymere werden hierbei üblicherweise in einer Menge von 0,01 bis 10 Gew.-%, vorzugsweise 0,1 bis 5 Gew.-%, bezogen auf den Feststoffgehalt der jeweiligen anorganischen Bindemittelmischung eingesetzt.

Desweiteren können die erfindungsgemäß hergestellten Pfropfpolymere auch für die Dispergierung von wäßrigen Tonsuspensionen eingesetzt werden, wie sie beispielsweise in Bohrspülungen in Form von Bentonitsuspensionen Verwendung finden. Außerdem weisen die Pfropfpolymere der Erfindung luftporenbildende Eigenschaften auf, weshalb sie mit gutem Erfolg als Luftporenbildner für Beton, Mörtel etc. herangezogen werden können. Aufgrund ihrer deutlich verzögernden Eigenschaften im Hinblick auf das Aushärten von Mörtel, Beton usw. können die erfindungsgemäßen Pfropfpolymere auch als Erstarrungsverzögerer eingesetzt werden, wodurch eine deutlich längere Verarbeitungszeit ermöglicht wird. Schließlich können die erfindungsgemäß hergestellten Pfropfpolymere auch als Retentionsmittel für wäßrige Systeme verwendet werden. Diese Produkte verhindern im allgemeinen die Abgabe von Wasser aus wasserhaltigen Medien wie z.B. Beton, Mörtel, Zementschlämme, Gips und Anhydritschlämme.

Die Vorteile der erfindungsgemäß hergestellten Pfropfpolymere liegen in der relativ einfachen und kostengünstigen Herstellungsmethode sowie den guten anwendungstechnischen Eigenschaften dieser Produkte wie z.B. nur geringer Lufteinführung sowie guter Druckfestigkeit der mit diesen Pfropfpolymeren hergestellten Bauprodukte.

Die nachfolgenden Beispiele sollen die Erfindung näher erläutern.

### Beispiele

### Herstellungsbeispiel 1

### a) Pfrogfpolymerisation

In einem Dreihalskolben, versehen mit KPG-Rührer, Rückflußkühler und Thermometer werden 60,0 g Poly(ethylen/propylen)-glykol-mono-(3-sulfopropyl)-ether-Natriumsalz (mittleres MW 1400) mit 37,9 g (0,38 mol) Maleinsäureanhydrid vorgelegt. Anschließend wird die Mischung unter Rühren auf 80°C erwärmt. Nachdem eine homogene Lösung entstanden ist, wird 1,2 g tert.-Butylperoxy-3,5,5-trimethyl-hexanoat (TBPTH) als Radikalstarter zugegeben und die Lösung auf 140°C erhitzt. Nach einer Stunde Reaktionszeit wird nochmals 1,2 g TBPTH zugesetzt. Dieser Vorgang wird insgesamt noch zweimal wiederholt. Nach beendeter Zugabe des Radikalstarters wird eine weitere Stunde bei 140°C nachgerührt.

### b) Derivatisierung

Zu der hochviskosen Reaktionsmischung werden dann 70,0 g Ethylenglykolmonomethylether (mittleres MW 750) gegeben und 2 Stunden auf 140°C erhitzt. Im Anschluß daran läßt man auf Raumtemperatur abkühlen und neutralisiert mit ca. 125,0 g Natronlauge (10 %-ig), wobei durch Kühlen die Temperatur unterhalb von 30°C gehalten wird. Die erhaltene klare, dunkelrote Lösung zeigt bei einem Feststoffgehalt von 59,9 % einen pH-Wert von 7,7 und eine Viskosität bei 20°C von 4,3 cSt als 20 %-ige Lösung.

### Herstellungsbeispiel 2

### a) Pfropfpolymerisation

Die Pfropfpolymerisation von 50,0 g Nonylphenolpoly-(ethylen/propylen)glykol (mittleres MW 1200) mit 30,0 g (0,31 mol) Maleinsäureanhydrid und 6 x 1,0 g tert.-Butyl-peroxy-2-ethyl-hexanoat (TBPEH) wird bei 110°C entsprechend der im Herstellungsbeispiel 1 beschriebenen Vorschrift durchgeführt.

### b) Derivatisierung

Zu der hochviskosen Reaktionsmischung werden dann 20,0 g (0,08 mol) Ethylenglykolmonomethylether (mittleres MW 200) gegeben und 2 Stunden auf 140°C erhitzt. Im Anschluß daran läßt man auf Raumtemperatur abkühlen und gibt 4,0 g (0,03 mol) Sulfanilsäure-Natrium-Salz, gelöst in 20,0 ml Wasser, zum Reaktionsansatz. Anschließend wird unter kräftigem Rühren mit ca. 120,0 g Natronlauge (10 %-ig) neutralisiert, wobei durch Kühlen die Temperatur unterhalb von 30°C gehalten wird. Die erhaltene klare, dunkelrote Lösung zeigt bei einem Feststoffgehalt von 45,2 % einen pH-Wert von 7,4 und eine Viskosität bei 20°C von 22,9 cSt als 20 %-ige Lösung.

### Herstellungsbeispiel 3

### a) Pfropfpolymerisation

Die Pfropfpolymerisation von 50,0 g Polyethylenglykol (mittleres MW 4000) mit 29,4 g (0,30 mol) Maleinsäureanhydrid und 6 x 1,0 g TBPEH wird bei 110°C entsprechend der im Herstellungsbeispiel 1 beschriebenen Vorschrift durchgeführt.

### b) Derivatisierung

Zu der hochviskosen Reaktionsmischung werden dann 10,0 g (0,05 mol) Ethylenglykolmonomethylether (mittleres MW 200) gegeben und 60 Minuten auf 140°C erhitzt. Im Anschluß daran läßt man auf Raumtemperatur abkühlen und gibt 29,2 g (0,15 mol) Sulfanilsäure-Natrium-Salz, gelöst in 60,0 ml Wasser, zum Reaktionsansatz. Anschließend wird unter kräftigem Rühren mit ca. 120,0 g Natronlauge (10 %-ig) neutralisiert, wobei durch Kühlen die Temperatur unterhalb von 30°C gehalten wird. Die erhaltene klare, dunkelrote Lösung zeigt bei einem Feststoffgehalt von 44,4 % einen pH-Wert von 7,9 und eine Viskosität bei 20°C von 6,7 cSt als 20 %-ige Lösung.

### Herstellungsbeispiel 4

### a) Pfropfpolymerisation

Die Pfropfpolymerisation von Polypropylentriol (mittleres MW 1055) mit 20,0 g (0,20 mol) Maleinsäureanhydrid und 2 x 1,0 g Dicumylperoxid (DCP) wird bei 140°C entsprechend der im Herstellungsbeispiel 1 beschriebenen Vorschrift durchgeführt.

### b) Derivatisierung

Zu der hochviskosen Reaktionsmischung werden dann 60,0 g (0,08 mol) Ethylenglykolmonomethylether (mittleres MW 750) gegeben und 2 Stunden auf 140°C erhitzt. Im Anschluß daran läßt man auf Raumtemperatur abkühlen und neutralisiert unter kräftigem Rühren mit ca. 80,0 g Natronlauge (10 %-ig), wobei durch Kühlen die Temperatur unterhalb von 30°C gehalten wird. Die erhaltene klare, rote Lösung zeigt bei einem Feststoffgehalt von 65,3 % einen pH-Wert von 7,2 und eine Viskosität bei 20°C von 10,8 cSt als 20 %-ige Lösung.

### Herstellungsbeispiel 5

### a) Pfropfpolymerisation

Die Pfropfpolymerisation von 75,0 g Polypropylenglykol (mittleres MW 1020) mit 47,4 g (0,48 mol) Maleinsäureanhydrid und 3 x 1,5 g DCP wird bei 140°C entsprechend der im Herstellungsbeispiel 1 beschriebenen Vorschrift durchgeführt.

### b) Derivatisierung

Zu der hochviskosen Reaktionsmischung werden dann 90,0 g (0,12 mol) Ethylenglykolmonomethylether (mittleres MW 750) gegeben und 2 Stunden auf 140°C erhitzt. Im Anschluß daran läßt man auf Raumtemperatur abkühlen und neutralisiert mit ca. 215,0 g Natronlauge (10 %-ig), wobei durch Kühlen die Temperatur unterhalb von 30°C gehalten wird. Die erhaltene klare, rote Lösung zeigt bei einem Feststoffgehalt von 49,6 % einen pH-Wert von 7,4 und eine Viskosität bei 20°C von 6,4 cSt als 20 %-ige Lösung.

### Herstellungsbeispiel 6

### a) Pfropfpolymerisation

Die Pfropfpolymerisation von 50,0 g Polypropylenglykol (mittleres MW 620) mit 42,0 g (0,32 mol) Itaconsäure und 6 x 1,0 g 2,5-Dimethyl-2,5-di-(2-ethylhexanoyl-peroxy)-hexan (DDEPH) wird bei 120°C entsprechend der im Herstellungsbeispiel 1 beschriebenen Vorschrift durchgeführt.

### b) Derivatisierung

Zu der hochviskosen Reaktionsmischung werden dann 20,0 g (0,10 mol) Ethylenglykolmonomethylether (mittleres MW 200) gegeben und 2 Stunden auf 140°C erhitzt. Im Anschluß daran läßt man auf Raumtemperatur abkühlen und neutralisiert mit ca. 170,0 g Natronlauge (10 %-ig), wobei durch Kühlen die Temperatur unterhalb von 30°C gehalten wird. Die erhaltene klare, gelbe Lösung zeigt bei einem Feststoffgehalt von 45,3 % einen pH-Wert von 7,7 und eine Viskosität bei 20°C von 4,0 cSt als 20 %-ige Lösung.

### Herstellungsbeispiel 7

### a) Pfropfpolymerisation

Die Pfropfpolymerisation von 70,0 g Polyethylenglykol (mittleres MW 1540) mit 44,2 g (0,45 mol) Maleinsäureanhydrid und 6 x 1,4 g TBPEH wird bei 110°C entsprechend der im Herstellungsbeispiel 1 beschriebenen Vorschrift durchgeführt.

### b) Derivatisierung

Zu der hochviskosen Reaktionsmischung werden dann 28,0 g (0,14 mol) Ethylenglykolmonobutylether (mittleres MW 200) gegeben und 2 Stunden auf 140°C erhitzt. Im Anschluß daran läßt man auf Raumtemperatur abkühlen und neutralisiert mit ca. 230,0 g Natronlauge (10 %-ig), wobei durch Kühlen die Temperatur unterhalb von 30°C gehalten wird. In Abständen von jeweils 15 Minuten werden sechs Portionen von 0,6 g Na₂S₂O₅ zu der wäßrigen Pfropfpolymerlösung gegeben und solange gerührt, bis kein Sulfit mehr nachweisbar ist. Die erhaltene klare, dunkelrote Lösung zeigt bei einem Feststoffgehalt von 43,0 % einen pH-Wert von 8,2 und eine Viskosität bei 20°C von 4,7 cSt als 20 %-ige Lösung.

### Herstellungsbeispiel 8

### a) Pfropfpolymerisation

Die Pfropfpolymerisation von 80,0 g Polyethylenglykol (mittleres MW 1540) mit 50,4 g (0,5 mol) Maleinsäureanhydrid und 6 x 1,6 g TBPEH wird bei 110°C entsprechend der im Herstellungsbeispiel 1 beschriebenen Vorschrift durchgeführt.

### b) Derivatisierung

Zu der hochviskosen Reaktionsmischung werden dann 32,0 g (0,16 mol) Ethylenglykolmonobutylether (mittleres MW 200) gegeben und 2 Stunden auf 140°C erhitzt. Anschließend läßt man auf Raumtemperatur abkühlen und gibt 0,3 g AIBN sowie 8,0 g (0,11 mol) Acrylsäure hinzu. Nach einer Reaktionszeit von einer Stunde neutralisiert man mit ca. 270,0 g Natronlauge (10 %-ig), wobei durch Kühlen die Temperatur unterhalb von 30°C gehalten wird. Die erhaltene klare, gelbe Lösung zeigt bei einem Feststoffgehalt von 42,0 % einen pH-Wert von 7,3 und eine Viskosität bei 20°C von 5,8 cSt als 20 %-ige Lösung.

### Herstellungsbeispiel 9

### a) Pfropfpolymerisation

Die Pfropfpolymerisation von 65,0 g Polyethylenglykol (mittleres MW 1540) mit 40,9 g (0,42 mol) Maleinsäureanhydrid und 6 x 1,3 g TBPEH wird bei 110°C entsprechend der im Herstellungsbeispiel 1 beschriebenen Vorschrift durchgeführt.

### b) Derivatisierung

Jetzt werden noch 6,5 g (0,05 mol) N-Vinylpyrrolidon sowie 0,3 g TBPEH hinzugegeben und man läßt 30 Minuten bei 110°C reagieren. Zu der hochviskosen Reaktionsmischung werden dann 26,0 g (0,13 mol) Ethylenglykolmonobutylether (mittleres MW 200) gegeben und 2 Stunden auf 140°C erhitzt. Im Anschluß daran läßt man auf Raumtemperatur abkühlen und neutralisiert mit ca. 200,0 g Natronlauge (10 %-ig), wobei durch Kühlen die Temperatur unterhalb von 30°C gehalten wird. Die erhaltene klare, rote Lösung zeigt bei einem Feststoffgehalt von 44,6 % einen pH-Wert von 7,6 und eine Viskosität bei 20°C von 5,0 cSt als 20 %-ige Lösung.

### Herstellungsbeispiel 10

### a) Pfropfpolymerisation

Die Pfropfpolymerisation von 85,0 g Polypropylenglykol (mittleres MW 2020) mit 53,5 g (0,54 mol) Maleinsäureanhydrid und 3 x 1,7 g TBPTH wird entsprechend der im Herstellungsbeispiel 1 beschriebenen Vorschrift durchgeführt.

### b) Derivatisierung

Zu der hochviskosen Reaktionsmischung wird dann 34,0 g (0,17 mol) Ethylenglykolmonobutylether (mittleres MW 200) gegeben und 2 Stunden auf 140°C erhitzt. Im Anschluß daran läßt man auf Raumtemperatur abkühlen und neutralisiert mit ca. 244,0 g Natronlauge (10 %-ig), wobei durch Kühlen die Temperatur unterhalb von 30°C gehalten wird. Die erhaltene klare, rote Lösung zeigt bei einem Feststoffgehalt von 41,0 % einen pH-Wert von 7,3 und eine Viskosität bei 20°C von 6,7 cSt als 20 %-ige Lösung.

### Herstellungsbeispiel 11

### a) Pfropfpolymerisation

In einem Dreihalskolben, versehen mit KPG-Rührer, Rückflußkühler und Thermometer werden 55,0 g Polypropylenglykol (mittleres MW 620) und 34,6 g (0,35 mol) Maleinsäureanhydrid vorgelegt. Anschließend wird die Mischung unter Rühren auf 80°C erwärmt. Nachdem eine homogene Lösung entstanden ist, wird 1,1 g TBPEH als Radikalstarter zugegeben und die Lösung auf 110°C erhitzt. Nach einer Stunde Reaktionszeit wird nochmals 1,1 g TBPEH zugesetzt. Dieser Vorgang wird insgesamt noch viermal wiederholt. Nach beendeter Zugabe des Radikalstarters wird eine weitere Stunde bei 110°C nachgerührt. Die hochviskose Reaktionsmischung wird dann in 88 ml DMF gelöst und auf Raumtemperatur abgekühlt (Lösung 1).

### b) Derivatisierung

In einem separaten Becherglas werden 35,8 g Natronlauge (20 %-ig) und 22,1 g (0,17 mol) Taurin so lange gerührt, bis eine klare Lösung entsteht (Lösung 2).

Die Derivatisierung erfolgt durch Zutropfen der Lösung 1 zu der Lösung 2. Dabei werden Lösung 1 und 132,0 g Natronlauge (10 %-ig) innerhalb von 30 Minuten simultan so zugegeben, daß der pH-Wert der Reaktionsmischung von anfänglich ca. 5,5 auf 7,0 bis 8,0 nach beendeter Zugabe ansteigt, wobei die Temperatur im Bereich von 30 bis 40°C gehalten wird. Nachdem noch 30 Minuten nachgerührt wurde, wird der Reaktionsansatz im Vakuum zur Trocknung eingedampft. Das erhaltene gelbe Pulver zeigt in 20 %-iger wäßriger Lösung einen pH-Wert von 7,5 und eine Viskosität bei 20°C von 3,53 cSt.

### Herstellungsbeispiel 12

### a) Pfropfpolymerisation

Die Pfropfpolymerisation von 55,0 g Polypropylenglykol (mittleres MW 2020) wird entsprechend dem Herstellungsbeispiel 11 durchgeführt, wobei Lösung 1 erhalten wird.

### b) Derivatisierung

In einem separaten Becherglas werden 35,8 g Natronlauge (20 %-ig) und 30,5 g (0,17 mol) Sulfanilsäure so lange gerührt, bis eine klare Lösung entsteht (Lösung 2).

Die Durchführung entspricht der im Herstellungsbeispiel 11 beschriebenen Vorgehensweise. Das erhaltene gelbe Pulver zeigt in 20 %-iger wäßriger Lösung einen pH-Wert von 7,5 und eine Viskosität bei 20°C von 6,2 cSt.

### Herstellungsbeispiel 13

### a) Pfropfpolymerisation

In einem Dreihalskolben, versehen mit KPG-Rührer, Rückflußkühler und Thermometer werden 75,0 g Polypropylenglykol (mittleres MW 620) und 47,2 g (0,48 mol) Maleinsäureanhydrid vorgelegt. Anschließend wird die Mischung unter Rühren auf 80°C erwärmt. Nachdem eine homogene Lösung entstanden ist, wird 1,5 g TBPEH als Radikalstarter zugegeben und die Lösung wird auf 110°C erhitzt. Nach einer Stunde Reaktionszeit wird nochmals 1,5 g TBPEH zugesetzt. Dieser Vorgang wiederholt sich noch insgesamt viermal. Nach beendeter Zugabe des Radikalstarters wird eine weitere Stunde bei 110°C gerührt.

### b) Derivatisierung

Die hochviskose Reaktionsmischung wird dann mit 37,5 g (0,40 mol) Ethylenglykolmonoethylether versetzt und 30 Minuten bei 110°C gehalten. Nachdem die Reaktionslösung auf Raumtemperatur abgekühlt ist, wird mit ca. 225,0 g Natronlauge (10 %-ig) neutralisiert. Die erhaltene klare, dunkelrote Lösung zeigt bei einem Feststoffgehalt von 38,8 % einen pH-Wert von 7,5 und eine Viskosität bei 20°C von 9,3 cSt als 20 %-ige Lösung.

### Herstellungsbeispiel 14

### a) Pfropfpolymerisation

In einem Dreihalskolben, versehen mit KPG-Rührer, Rückflußkühler und Thermometer werden 85,0 g Polypropylenglykol (mittleres MW 4020) und 53,5 g (0,54 mol) Maleinsäureanhydrid vorgelegt. Anschließend wird die Mischung unter Rühren auf 80°C erwärmt.

Nachdem eine homogene Lösung entstanden ist, wird 1,8 g TBPEH als Radikalstarter zugegeben und die Lösung wird auf 110°C erhitzt. Nach einer Stunde Reaktionszeit wird nochmals 1,8 g TBPEH zugesetzt. Dieser Vorgang wiederholt sich noch viermal. Nach beendeter Zugabe des Radikalstarters wird eine weitere Stunde bei 110°C gerührt.

### b) Derivatisierung

Zu der hochviskosen Reaktionsmischung werden dann 45,0 g (0,51 mol) Morpholin gegeben und 1 Stunde auf 100°C erhitzt. Im Anschluß daran läßt man die Reaktionslösung auf Raumtemperatur abkühlen und neutralisiert mit ca. 252,0 g Natronlauge (10 %-ig), wobei durch Kühlen die Temperatur unterhalb von 30°C gehalten wird. Die erhaltene klare, rote Lösung zeigt bei einem Feststoffgehalt von 54,7 % einen pH-Wert von 7,2 und eine Viskosität bei 20°C von 4,9 cSt als 20 %-ige Lösung.

### Herstellungsbeispiel 15

### a) Pfropfpolymerisation

In einem Dreihalskolben, versehen mit KPG-Rührer, Rückflußkühler und Thermometer werden 50,0 g Polypropylenglykol (mittleres MW 2020) mit 4,5 g (0,045 mol) Bernsteinsäureanhydrid vorgelegt. Anschließend wird die Mischung unter Rühren auf 120°C erwärmt und man gibt 31,6 g (0,32 mol) Maleinsäureanhydrid hinzu. Nachdem eine homogene Lösung entstanden ist, wird 1,0 g TBPTH als Radikalstarter zugegeben und die Lösung auf 140°C erhitzt. Nach einer Stunde Reaktionszeit wird nochmals 1,0 g TBPTH zudosiert. Dieser Vorgang wird insgesamt noch zweimal wiederholt. Nach beendeter Zugabe des Radikalstarters wird eine weitere Stunde bei 140°C nachgerührt.

### b) Derivatisierung

Zu der hochviskosen Reaktionsmischung werden dann 60,0 g Ethylenglykolmonomethylester (mittleres MW 750) gegeben und 2 Stunden auf 140°C erhitzt. Im Anschluß daran läßt man auf Raumtemperatur abkühlen und neutralisiert mit ca. 125,0 g Natronlauge (10 %-ig), wobei durch Kühlen die Temperatur unterhalb von 30°C gehalten wird. Die erhaltene klare, dunkelrote Lösung zeigt bei einem Feststoffgehalt von 54,3 % einen pH-Wert von 7,4 und eine Viskosität bei 20°C von 4,7 cSt als 20 %-ige Lösung.

### Anwendungsbeispiele

### Anwendungsbeispiel 1

### Dispergierung von Portlandzement

Die in den Herstellungsbeispielen beschriebenen Pfropfpolymere wurden in Anlehnung an DIN 1048 Teil 1 auf ihr Fließverhalten in Betonmischungen ausgetestet.

Folgende Betonmischungen wurden hergestellt:
4,2 kg Sand 0 bis 4 mm
2,3 kg Sand 4 bis 8 mm
7,0 kg Kiesel 8 bis 16 mm
9,5 kg Kiesel 16 bis 32 mm
5,3 kg PZ 35 F.

Im Anschluß an die Messung des Ausbreitmaßes wurden Würfel mit einer Kantenlänge von 15 cm hergestellt und die Druckfestigkeiten nach einem Tag in Anlehnung an DIN 1048 Teil 1 bestimmt.

**Tabelle 1**

| Ausbreitmaß und Druckfestigkeit nach DIN 1048 Teil 1 von Fließmittel enthaltenden Betonmischungen. | | | | | |
|---|---|---|---|---|---|
| Zusatzmittel Herstellungsbeispiel | Dosierung [%] | W/Z | Ausbreitmaß [cm] | | 1d-Druckfestigkeit [N/mm²] |
| | | | a₁₀ | a₄₀ | |
| Nullwert | - | 0,49 | 35,00 | - | - |
| 2 | 0,18 | 0,49 | 51,75 | 43,0 | 7,8 |
| 4 | 0,18 | 0,49 | 47,50 | 41,0 | 11,4 |
| 5 | 0,18 | 0,49 | 49,50 | 42,0 | 9,4 |
| 11 | 0,18 | 0,49 | 51,75 | 42,0 | 8,1 |
| 12 | 0,18 | 0,49 | 51,25 | 45,0 | 7,9 |
| 13 | 0,18 | 0,49 | 56,75 | 48,5 | 5,6 |

### Anwendungsbeispiel 2

### Dispergierung von Tiefbohrzementschlämmen

Die Dispergierwirkung des Pfropfpolymers entsprechend Herstellungsbeispiel 10 an Tiefbohrzementschlämmen wird durch den nachfolgenden Versuch verdeutlicht.

Man bereitet nach der vom American Petroleum Institute (API) in Specification RP 10 B, "API Specification for Materials and Testing for Well Cements", festgelegten Vorschrift Zementschlämmen, bestehend aus Class H-Zement und Wasser (W/Z = 0,38). Zur Untersuchung der viskositätsverringernden Wirkung des entsprechenden Pfropfpolymeren wird das Zusatzmittel im Anmachwasser gelöst vorgelegt, anschließend werden die Viskositäten der Zementschlämmen mit einem FANN-Viskosimeter (Modell 35 SA, Rotor-Bob R1 B1) bei 100°F und 190°F bei vier verschiedenen Schergradienten vermessen.

**Tabelle 2**

| Viskosität von Tiefbohrzementschlämmen mit viskositätsverringerndem Pfropfpolymer entsprechend Herstellungsbeispiel 10 | | | | | |
|---|---|---|---|---|---|
| Dosierung ¹⁾ [Gew.-%] | Temp. [°F] | prozentuale Absenkung der FANN Rheologie bei rpm | | | |
| | | 600 | 300 | 200 | 100 |
| - | 100 | 0 | 0 | 0 | 0 |
| 0,5 | 100 | -71 | -83 | -87 | -91 |
| 1,0 | 100 | -72 | -84 | -87 | -92 |
| - | 190 | 0 | 0 | 0 | 0 |
| 0,5 | 190 | -80 | -87 | -89 | -89 |
| 1,0 | 190 | -83 | -91 | -93 | -94 |

| | | | | | |
|---|---|---|---|---|---|
| ¹⁾ Dosierung bezogen auf eingesetztem Zement | | | | | |

### Anwendungsbeispiel 3

### Dispergierung von Bentonitsuspensionen

Bentonitsuspensionen finden als Zusatzmittel zur Erhöhung der Austragskraft in Bohrspülungen Anwendung. Dabei muß jedoch die Bohrspülung pumpbar bleiben, d.h. der Viskositätsaufbau durch den Bentonit muß durch Thinner bzw. Deflocculants kontrolliert werden. Die Dispergierwirkung des Pfropfpolymeren entsprechend Herstellungsbeispiel 10 an 8 Gew.-%iger Tixotonsuspension ist in der nachfolgenden Tabelle aufgelistet. Die Vermessung der Rheologie wurde bei Raumtemperatur mit einem FANN-Viskosimeter (Modell 35 SA, Rotor-Bob R1 B1) durchgeführt.

**Tabelle 3**

| Abnahme der Rheologie einer 8 Gew.-%igen Tixotonspülung nach Zusatz eines Pfropfpolymers entsprechend Herstellungsbeispiel 10 | | | | | | |
|---|---|---|---|---|---|---|
| Dosierung ¹⁾ [Gew.-%] | prozentuale Absenkung der FANN-Rheologie bei rpm | | | | | |
| | 600 | 300 | 200 | 100 | 6 | 3 |
| - ²⁾ | O | 0 | 0 | 0 | 0 | 0 |
| 1,0 | -26 | -42 | -48 | -53 | -61 | -64 |
| 3,0 | -54 | -76 | -81 | -87 | -94 | -95 |

| | | | | | | |
|---|---|---|---|---|---|---|
| ¹⁾ Dosierung bezogen auf eingesetztem Zement | | | | | | |
| ²⁾ 8 Gew.-%ige Tixotonspülung ohne Zusatz | | | | | | |

### Anwendungsbeispiel 4

### Luftporenbildner

Das nachfolgend aufgeführte Beispiel verdeutlicht die Luftporen bildende Eigenschaft des Pfropfpolymeren entsprechend Herstellungsbeispiel 5.

Zur Bestimmung des Luftporengehaltes wurde ein Normenmörtel (DIN 1164) mit dem entsprechenden Pfropfpolymer hergestellt. Die Luftporengehaltsmessung erfolgt in einem Luftgehaltprüfer mit 1-1-Topf nach DIN 18855 Teil 2.

Die Ergebnisse sind in Tabelle 4 dargestellt.

**Tabelle 4**

| Normenmörtel mit Luftporenbildner bestehend aus einem Pfropfpolymer entsprechend Herstellungsbeispiel 5 | | | |
|---|---|---|---|
| Nr. | W/Z | Pfropfpolymer [Gew.-%] | LP-Gehalt [Vol.-%] |
| 1 | 0,5 | - | 5 |
| 2 | 0,478 | 0,9 | 28 |

### Anwendungsbeispiel 5

### Betonverzögerer

Das folgende Beispiel demonstriert die verzögernde Wirkung des Pfropfpolymeren entsprechend Herstellungsbeispiel 10 an Zementleim.

Mit 500 Gew.-Teilen Portlandzement der Festigkeitsklasse 35 F und Wasser wird ein Zementleim mit Normensteife (DIN 1164 Teil 5) hergestellt. Anschließend wird das entsprechende Pfropfpolymer zugesetzt und die Erstarrungszeiten mit Hilfe eines Vicat-Gerätes bestimmt (DIN 1164).

**Tabelle 5**

| Erstarrungszeiten am Zementleim | | | | |
|---|---|---|---|---|
| Zusatzmittel | Dosierung bez. auf Zement [Gew.-%] | W/Z | Erstarren | |
| | | | Beginn [h:min] | Ende [h:min] |
| - | - | 0,30 | 2:35 | 4:10 |
| Pfropfpolymer | 0,2 | 0,28 | 4:20 | 5:45 |

Durch Zusatz des Pfropfpolymeren wird Beginn und Ende des Erstarrens deutlich zu längeren Zeitpunkten hin verschoben.

### Anwendungsbeispiel 6

### Wasserrückhaltung

Das folgende Beispiel verdeutlicht das Wasserrückhaltevermögen des Pfropfpolymeren entsprechend Herstellungsbeispiel 4.

Dies soll durch die Verklebung von Gasbetonwürfeln mit Zementleim, dem das Pfropfpolymer zugesetzt wurde, gezeigt werden.

Man bereitet durch inniges, 1 Minute dauerndes Verrühren von 100 Gew.-Teilen Portlandzement (PZ 35 F) nach DIN 1164 sowie 36 Gew.-Teilen Wasser einen Zementleim und trägt diese auf der Seitenfläche eines Gasbetonwürfels mit einer Kantenlänge von 4 cm und einem spezifischen Gewicht von 0,60 g/cm³ gleichmäßig auf. Anschließend drückt man einen weiteren Gasbetonwürfel mit einer Seitenfläche auf den Zementleim und läßt die Würfel 24 Stunden stehen. Nach dieser Zeit wird geprüft, ob die Verklebung der beiden Gasbetonwürfel durch den Zementleim fest ist, oder ob beim Drücken ein Bruch in der Fuge eintritt.

Zementleime mit guter Wasserretention geben kein Wasser an den saugfähigen Gasbeton ab und zeigen daher eine feste Verklebung.

Führt man den oben beschriebenen Versuch ohne Zusatzmittel durch, dann können beide Gasbetonwürfel durch leichten Druck getrennt werden. Die Verklebung hält nicht, weil das Wasser aus dem Zementleim in den porösen Gasbeton gesaugt wurde und der Zement nicht mehr vollständig abbinden konnte.

Hingegen bei Zusatz von 0,4 Gew.-% (bezogen auf die Zementmenge) des pulverförmigen Pfropfpolymeren bricht die Verklebung auch bei starkem Druck nicht, da das Wasser im Zementleim verblieben ist.

## Patentansprüche

1. Verfahren zur Herstellung
wasserlöslicher Pfropfpolymere,
umfassend die Schritte
a) radikalische Pfropfung eines Polyalkylenoxids der allgemeinen Formel (I) 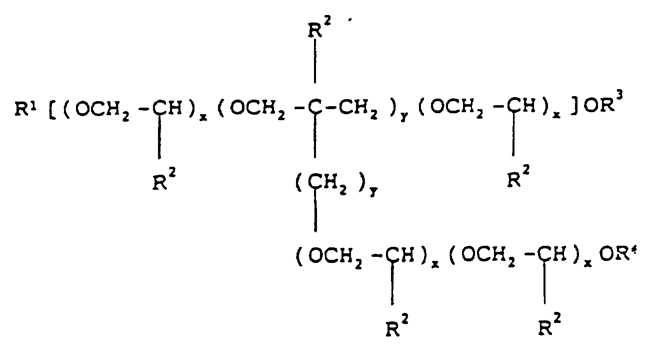 in der
R¹ = -H, -CₙH₂ₙ₊₁, -C₆H₄-CₙH₂ₙ₊₁, 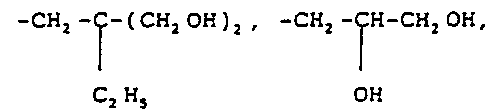 -(CH-R²)ₘNHR², -(CH-R²)ₘOH, -(CH-R²)ₘ-COOH, -CO-R⁵
R² = -H, -CH₃, -C₂H₅
R³ = -H, -CₙH₂ₙ₊₁, -CₘH₂ₘ-SO₃Na, -(CH-R²)ₘNHR², -(CH-R²)ₘOH, -(CH-R²)ₘ-COOH, -CO-R⁵
R⁴ = -H, -(CH-R²)ₘ-COOH, -CO-R⁵
R⁵ = -CₘH₂ₘ₊₁, -C₆H₅, -(CH-R²)ₘ-COOH, -C₆H₄-COOH n = 1 - 18; m = 1 - 5; x = 2 - 200; y = 0 oder 1 bedeuten
mit einer ethylenisch ungesättigten Mono- oder Dicarbonsäure bzw. deren Anhydrid und anschließend
b) Derivatisierung mit einem primären oder sekundären Amin und/oder Alkohol, wobei ein Amid und/oder Ester gebildet wird.

2. Verfahren nach Anspruch 1,
**dadurch gekennzeichnet,**
**daß** das Polyalkylenoxid aus Polyethylenglykol und/oder Polypropylenglykol bzw. deren Mischpolymerisaten besteht.

3. Verfahren nach Anspruch 1,
**dadurch gekennzeichnet,**
**daß** das Polyalkylenoxid aus Polyethylentriol und/oder Polypropylentriol bzw. deren Mischpolymerisaten besteht.

4. Verfahren nach den Ansprüche 1 bis 3,
**dadurch gekennzeichnet,**
**daß** die ethylenisch ungesättigte Mono- oder Dicarbonsäure aus der Gruppe Maleinsäure, Fumarsäure, Itaconsäure und Acrylsäure ausgewählt wird.

5. Verfahren nach den Ansprüchen 1 bis 3,
**dadurch gekennzeichnet,**
**daß** als Carbonsäureanhydrid Maleinsäureanhydrid oder Itaconsäureanhydrid eingesetzt wird.

6. Verfahren nach den Ansprüchen 1 bis 5,
**dadurch gekennzeichnet,**
**daß** das Gewichtsverhältnis von Polyalkylenoxid zu ethylenisch ungesättigter Mono- oder Dicarbonsäure bzw. deren Anhydrid im Bereich von 98:2 bis 20:80 liegt.

7. Verfahren nach den Ansprüchen 1 bis 6,
**dadurch gekennzeichnet,**
**daß** die Pfropfung bei einer Temperatur von 50 bis 180 °C durchgeführt wird.

8. Verfahren nach den Ansprüchen 1 bis 7,
**dadurch gekennzeichnet,**
**daß** die ethylenisch ungesättigte Mono- oder Dicarbonsäure bzw. deren Anhydrid nach der Pfropfung durch Umsetzung mit Basen teilweise in die Salzform übergeführt wird.

9. Verfahren nach den Ansprüchen 1 bis 8,
**dadurch gekennzeichnet,**
**daß** für die Derivatisirung ein primäres oder sekundäres Amin mit einem aliphatischen, araliphatischen, aromatischen oder heterocyclischen Rest eingesetzt wird.

10. Verfahren nach Anspruch 9,
**dadurch gekennzeichnet,**
**daß** der aliphatische Rest einen gesättigten oder ungesättigten sowie gegebenenfalls verzweigten Kohlenwasserstoffrest mit 1 bis 18 C-Atomen darstellt.

11. Verfahren nach den Ansprüchen 9 und 10,
**dadurch gekennzeichnet,**
**daß** die Reste des primären oder sekundäuren Amins noch funktionelle Gruppen, insbesondere -OH, -OR, NH₂, -NR²₂, -SO₃H, -SO₃Na, -COOH, -COONa aufweisen.

12. Verfahren nach den Ansprüchen 1 bis 8,
**dadurch gekennzeichnet,**
**daß** für die Derivatisierung ein primärer oder sekundärer Alkohol mit aliphatischen, araliphatischen, cyclischen oder aromatischen Resten verwendet wird.

13. Verfahren nach Anspruch 12,
**dadurch gekennzeichnet,**
**daß** der aliphatische Rest einen gesättigten oder ungesättigten gegebenenfalls verzweigten Koblenwasserstoffrest mit 1 bis 18 C-Atomen darstellt.

14. Verfahren nach Anspruch 12,
**dadurch gekennzeichnet,**
**daß** für die Derivatisierung ein Polyalkylenglykolmonoalkylether 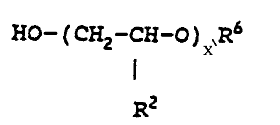 mit R⁶ = -C_{n'}H_{2 n' + 1}, -C₆H₄-C_{n'}H_{2 n' + 1}, n' = 1 - 10, x' = 1 - 100 eingesetzt wird.

15. Verfahren nach den Ansprüchen 1 bis 14,
**dadurch gekennzeichnet,**
**daß** das Molverhältnis von ethylenisch ungesättigter Mono- oder Dicarbonsäure bzw. deren Anhydrid zu primärem oder sekundärem Amin bzw. Alkohol im Bereich von 99:1 bis 50:50 liegt.

16. Verfahren nach den Ansprüchen 1 bis 15,
**dadurch gekennzeichnet,**
**daß** die Derivatisierung gegebenenfalls in Wasser bei einer Temperatur von 20 bis 200 °C durchgeführt wurde.

17. Verfahren nach den Ansprüchen 1 bis 16,
**dadurch gekennzeichnet,**
**daß** vor oder nach der Derivatisierung (Stufe b) eine radikalische oder nukleophile Addition an die ethylenisch ungesättigten Gruppen der Carbonsäurederivate vorgenommen wird.

18. Verfahren nach Anspruch 17,
**dadurch gekennzeichnet,**
**daß** die nukleophile Addition durch Umsetzung mit Natriumsulfiten durchgeführt wird.

19. Verfahren nach Anspruch 17,
**dadurch gekennzeichnet,**
**daß** die radikalische Addition durch Umsetzung mit Vinyl- oder Acrylderivaten vorgenommen wird.

20. Verfahren nach Anspruch 19,
**dadurch gekennzeichnet,**
**daß** ein Vinylderivat, ausgewählt aus der Gruppe N-Vinylpyrrolidon, Vinylsulfonsäure oder Styrol verwendet wird.

21. Verfahren nach Anspruch 19,
**dadurch gekennzeichnet,**
**daß** ein Acrylderivat, ausgewählt aus der Gruppe Acrylsäure, Acrylsäureamid oder Acrylsäureester eingesetzt wird.

22. Verfahren nach den Ansprüchen 17 bis 21,
**dadurch gekennzeichnet,**
**daß** die Natriumsulfite, Vinyl- oder Acrylderivate in einer Menge von 0,1 bis 50 Mol-%, bezogen auf die Menge der ethylenisch ungesättigten Mono- bzw. Dicarbonsäure bzw. deren Anhydride, verwendet werden.

23. Verfahren nach den Ansprüchen 17 bis 22,
**dadurch gekennzeichnet,**
**daß** die radikalische oder nukleophile Addition in wäßrigem Medium bei einer Temperatur von 20 bis 120 °C durchgeführt wurde.

24. Verwendung von nach einem Verfahren gemäß einem der Ansprüche 1 bis 23 hergestellten Pfropfpolymeren als Dispergiermittel für Wasser enthaltende anorganische Bindemittel wie Zement, Gips, Anhydrit.

25. Verwendung nach Anspruch 24,
**dadurch gekennzeichnet,**
**daß** die Wasser enthaltenden anorganischen Bindemittel Zuschlagstoffe sowie weitere Zusatzmittel wie Luftporenbildner, Verflüssiger, Beschleuniger oder Verzögerer enthalten.

26. Verwendung nach den Ansprüchen 24 und 25,
**dadurch gekennzeichnet,**
**daß** sie in einer Menge von 0,01 bis 10 Gew.-%, vorzugsweise 0,1 bis 5 Gew.-%, bezogen auf den Feststoffgehalt der anorganischen Bindemittelgemische eingesetzt werden.

27. Verwendung nach den Ansprüchen 1 bis 23 als Dispergiermittel für wäßrige Tonsuspensionen.

28. Verwendung nach den Ansprüchen 1 bis 23 als Luftporenbildner für Mörtel oder Beton.

29. Verwendung nach den Ansprüchen 1 bis 23 als Erstarrungsverzögerer für Mörtel oder Beton.

30. Verwendung nach den Ansprüchen 1 bis 23. als Retentionsmittel für wäßrige Systeme.

## Claims

1. Process for the production of water-soluble graft polymers comprising the steps:
a) radical grafting of a polyalkylene oxide of the general formula (I) 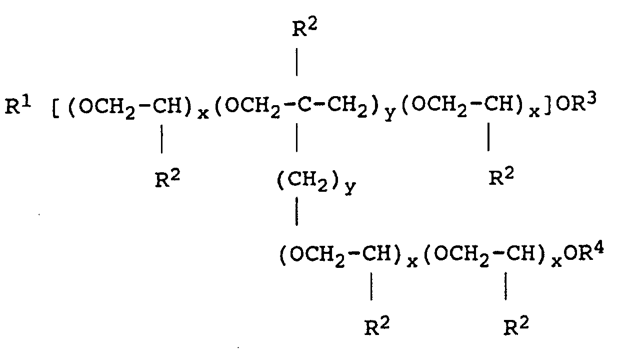 in which
R¹ = -H, -CₙH_{2 n+1}, -C₆H₄-CₙH_{2 n+1}, 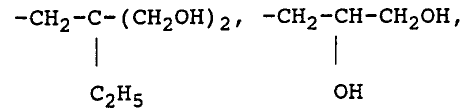 -(CH-R²)ₘNHR², -(CH-R²)ₘOH, -(CH-R²)ₘ-COOH, -CO-R⁵
R² = -H, -CH₃, -C₂H₅
R³ = -H, -CₙH_{2 n+1}, -CₘH₂ₘ-SO₃Na, -(CH-R²)ₘNHR², -(CH-R²)ₘOH, -(CH-R²)ₘ-COOH, -CO-R⁵
R⁴ = -H, -(CH-R²)ₘ-COOH, -CO-R⁵
R⁵ = -CₘH_{2 m+1}, -C₆H₅, -(CH-R²)ₘ-COOH, -C₆H₄-COOH n denotes 1 - 18, m denotes 1 - 5, x denotes 2 - 200, y denotes 0 or 1
with an ethylenically unsaturated mono or dicarboxylic acid or their anhydride and subsequently
b) derivatising with a primary or secondary amine and/or alcohol to form an amide and/or ester.

2. Process as claimed in claim 1,
wherein
the polyalkylene oxide is composed of polyethylene glycol and/or polypropylene glycol or their copolymers.

3. Process as claimed in claim 1,
wherein
the polyalkylene oxide is composed of polyethylene triol and/or polypropylene triol or their copolymers.

4. Process as claimed in claims 1 to 3,
wherein
the ethylenically unsaturated mono or dicarboxylic acid is selected from the group maleic acid, fumaric acid, itaconic acid and acrylic acid.

5. Process as claimed in claims 1 to 3,
wherein
maleic acid anhydride or itaconic acid anhydride is used as the carboxylic acid anhydride.

6. Process as claimed in claims 1 to 5,
wherein
the ratio by weight of polyalkylene oxide to ethylenically unsaturated mono or dicarboxylic acid or their anhydride is in the range of 98:2 to 20:80.

7. Process as claimed in claims 1 to 6,
wherein
the grafting is carried out at a temperature of 50 to 180°C.

8. Process as claimed in claims 1 to 7,
wherein
the ethylenically unsaturated mono or dicarboxylic acid or their anhydride is partially converted into the salt form by reaction with bases after the grafting.

9. Process as claimed in claims 1 to 8,
wherein
a primary or secondary amine with an aliphatic, araliphatic, aromatic or heterocyclic residue is used for the derivatisation.

10. Process as claimed in claim 9,
wherein
the aliphatic residue represents a saturated or unsaturated and, if desired, branched hydrocarbon residue with 1 to 18 C atoms.

11. Process as claimed in claims 9 and 10,
wherein
the residues of the primary or secondary amine also have functional groups, in particular -OH, -OR,-NH₂, -NR²₂, -SO₃H, -SO₃Na, -COOH, -COONa.

12. Process as claimed in claims 1 to 8,
wherein
a primary or secondary alcohol with aliphatic, araliphatic, cyclic or aromatic residues is used for the derivatisation.

13. Process as claimed in claim 12,
wherein
the aliphatic residue represents a saturated or unsaturated, if desired, branched hydrocarbon residue with 1 to 18 C atoms.

14. Process as claimed in claim 12,
wherein
a polyalkylene glycol monoalkyl ether 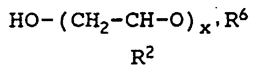 in which R⁶ = -C_{n'}H_{2n'+1}, -C₆H₄-C_{n'}H_{2n'+1}, n' = 1 - 10, x' = 1 - 100 is used for the derivatisation.

15. Process as claimed in claims 1 to 14,
wherein
the mole ratio of ethylenically unsaturated mono or dicarboxylic acid or their anhydride to primary or secondary amine or alcohol is in the range of 99:1 to 50:50.

16. Process as claimed in claims 1 to 15,
wherein
the derivatisation was carried out if desired in water at a temperature of 20 to 200°C.

17. Process as claimed in claims 1 to 16,
wherein
before or after the derivatisation (step b), a radical or nucleophilic addition is carried out on the ethylenically unsaturated groups of the carboxylic acid derivatives.

18. Process as claimed in claim 17,
wherein
the nucleophilic addition is carried out by reaction with sodium sulfites.

19. Process as claimed in claim 17,
wherein
the radical addition is carried out by reaction with vinyl or acryl derivatives.

20. Process as claimed in claim 19,
wherein
a vinyl derivative selected from the group N-vinylpyrrolidone, vinylsulfonic acid or styrene is used.

21. Process as claimed in claim 19,
wherein
an acryl derivative selected from the group acrylic acid, acrylic acid amide or acrylic acid ester is used.

22. Process as claimed in claims 17 to 21,
wherein
the sodium sulfites, vinyl or acryl derivatives are used in an amount of 0.1 to 50 mol % in relation to the amount of ethylenically unsaturated mono or dicarboxylic acid or their anhydrides.

23. Process as claimed in claims 17 to 22,
wherein
the radical or nucleophilic addition was carried out in an aqueous medium at a temperature of 20 to 120°C.

24. Use of the graft polymers produced by a process according to one of the claims 1 to 23 as dispersants for inorganic binding agents containing water such as cement, gypsum, anhydrite.

25. Use as claimed in claim 24,
wherein
the inorganic binding agents containing water contain aggregate materials as well as further additives such as air-entraining agents, liquefiers, accelerators or retardents.

26. Use as claimed in claims 24 and 25,
wherein
they are used in an amount of 0.01 to 10 % by weight, preferably 0.1 to 5 % by weight, in relation to the solids content of the inorganic binding agent mixtures.

27. Use as claimed in claims 1 to 23 as dispersants for aqueous clay suspensions.

28. Use as claimed in claims 1 to 23 as air-entraining agents for mortar or concrete.

29. Use as claimed in claims 1 to 23, as setting retardents for mortar or concrete.

30. Use as claimed in claims 1 to 23 as retention agents for aqueous systems.

## Revendications

1. Procédé pour la préparation
de polymères greffés hydrosolubles
comprenant les étapes
a) de greffage radicalaire d'un oxyde de polyalkylène correspondant à la formule générale (I) 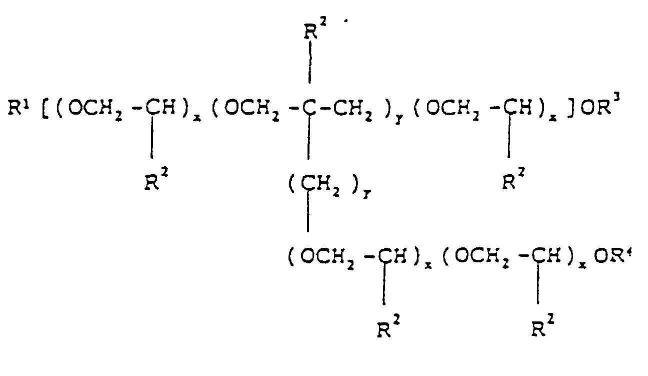 dans laquelle
R¹ = -H, -CₙH₂ₙ₊₁, -C₆H₄-CₙH₂ₙ₊₁, 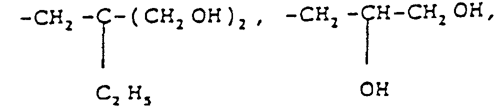 -(CH-R²)ₘNHR², -(CH-R²)ₘOH, -(CH-R²)ₘ-COOH, -CO-R⁵
R² = -H, -CH₃, -C₂H₅
R³ = -H, -CₙH₂ₙ₊₁, -CₘH₂ₘ-SO₃Na, -(CH-R²)ₘNHR², -(CH-R²)ₘOH, -(CH-R²)ₘ-COOH, -CO-R⁵
R⁴ = -H, -(CH-R²)ₘ-COOH, -CO-R⁵
R⁵ = -CₘH₂ₘ₊₁, -C₆H₅, -(CH-R²)ₘ-COOH, -C₆H₄-COOH n = 1 - 18 ; m = 1 - 5 ; x = 2 - 200 ; y = 0 ou 1
avec un acide mono ou dicarboxylique insaturé en éthyle ou leur anhydride et encore
b) de dérivation avec une amine primaire ou secondaire et/ou un alcool, suite à quoi on obtient une amine et/ou un ester.

2. Procédé selon la revendication 1
**caractérisé en ce que**
l'oxyde de polyalkylène se compose de polyéthylèneglycol et/ou de polypropylèneglycol ou de leurs copolymères.

3. Procédé selon la revendication 1
**caractérisé en ce que**
l'oxyde de polyalkylène se compose de polyéthylènetriol et/ou de polypropylènetriol ou de leurs copolymères.

4. Procédé selon les revendications 1 à 3
**caractérisé en ce que**
l'acide mono ou dicarboxylique insaturé en éthyle est choisi dans le groupe de l'acide maléique, de l'acide fumarique, de l'acide itaconique et de l'acide acrylique.

5. Procédé selon les revendications 1 à 3
**caractérisé en ce que**
l'on utilise comme anhydride d'acide carboxylique de l'anhydride d'acide maléique ou de l'anhydride d'acide itaconique.

6. Procédé selon les revendications 1 à 5
**caractérisé en ce que**
le rapport en masse de l'oxyde de polyalkylène sur l'acide mono ou dicarboxylique insaturé en éthyle ou leur anhydride est compris entre 98:2 et 20:80.

7. Procédé selon les revendications 1 à 6
**caractérisé en ce que**
le greffage est réalisé à une température comprise entre 50 et 180 °C.

8. Procédé selon les revendications 1 à 7
**caractérisé en ce que** suite au greffage l'acide mono ou dicarboxylique
insaturé en éthyle ou leur anhydride sont convertis partiellement en sels par réaction avec des bases.

9. Procédé selon les revendications 1 à 8
**caractérisé en ce que**
pour la dérivation on utilise une amine primaire ou secondaire avec un résidu aliphatique, araliphatique, aromatique ou hétérocyclique.

10. Procédé selon la revendication 9
**caractérisé en ce que**
le résidu aliphatique présente un résidu d'hydrocarbure saturé ou insaturé et éventuellement ramifié comportant entre 1 à 18 atomes de C.

11. Procédé selon les revendications 9 et 10
**caractérisé en ce que**
les résidus des amines primaires ou secondaires présentent encore des groupes fonctionnels, en particulier -OH, -OR, -NH₂, -NR²₂, -SO₃H,-SO₃Na, - COOH, - COONa.

12. Procédé selon les revendications 1 à 8
**caractérisé en ce que**
pour la dérivation on utilise un alcool primaire ou secondaire comportant des résidus aliphatiques, araliphatiques, cycliques ou aromatiques.

13. Procédé selon la revendication 12
**caractérisé en ce que**
le résidu aliphatique présente un résidu d'hydrocarbure saturé ou insaturé éventuellement ramifié comportant entre 1 à 18 atomes de C.

14. Procédé selon la revendication 12
**caractérisé en ce que**
on utilise pour la dérivation un monoalkyléther de polyalkylèneglycol 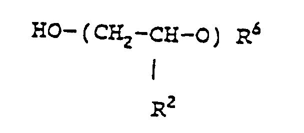 où R⁶ = -C_{n'}H_{2n'+1'}, -C₆H₄-C_{n'}H_{2n'+1}, n' = 1 - 10,
x' = 1 -100

15. Procédé selon les revendications 1 à 14
**caractérisé en ce que**
le rapport molaire de l'acide mono ou dicarboxylique insaturé en éthyle ou leur anhydride sur l'amine ou l'alcool primaire ou secondaire se situe entre 99:1 et 50:50.

16. Procédé selon les revendications 1 à 15
**caractérisé en ce que**
la dérivation est réalisée éventuellement dans de l'eau à une température comprise entre 20 et 200 °C.

17. Procédé selon les revendications 1 à 16
**caractérisé en ce que**
avant ou après la dérivation (étape b) on procède à une addition radicalaire ou nucléophile sur les groupes insaturés en éthyle des dérivés d'acide carboxylique.

18. Procédé selon la revendication 17
**caractérisé en ce que**
l'addition nucléophile est réalisée par transformation avec des sulfites de sodium.

19. Procédé selon la revendication 17
**caractérisé en ce que**
l'on procède à l'addition radicalaire par transformation avec des dérivés vinyliques ou acryliques.

20. Procédé selon la revendication 19
**caractérisé en ce que**
l'on utilise un dérivé vinylique choisi dans le groupe composé de la n-vinylpyrrolidone, de l'acide vinylesulfonique ou du styrène.

21. Procédé selon la revendication 19
**caractérisé en ce que**
on utilise un dérivé acrylique choisi dans le groupe d'acide acrylique, d'amide d'acide acrylique ou d'acrylate.

22. Procédé selon les revendications 17 à 21
**caractérisé en ce que**
les sulfites de sodium, les dérivés vinyliques ou acryliques sont utilisés selon un rapport molaire allant de 0,1 à 50 % en mole sur la base de la quantité d'acide monocarboxylique ou dicarboxylique insaturé en éthyle ou de leurs anhydrides.

23. Procédé selon les revendications 17 à 22
**caractérisé en ce que**
l'addition radicalaire ou nucléophile est réalisée en milieu aqueux à une température comprise entre 20 et 120 °C.

24. Utilisation de polymères greffés par un procédé selon l'une des revendications 1 à 23 en tant qu'agent dispersant pour des liants inorganiques contenant de l'eau comme le ciment, le plâtre, l'anhydrite.

25. Utilisation selon la revendication 24
**caractérisée en ce que**
les liants inorganiques comportant de l'eau contiennent des agents supplémentaires comme d'autres additifs tels des entraîneurs d'air, des fluidifiants, des accélérateurs ou des retardateurs.

26. Utilisation selon les revendications 24 et 25
**caractérisée en ce que**
elle est employée dans une quantité comprise entre 0,01 et 10 % en masse, de préférence entre 0,1 et 5 % en masse, sur la base de la teneur en matière solide du mélange de liants inorganiques.

27. Utilisation selon les revendications 1 à 23 en tant qu'agent dispersant pour suspensions aqueuses d'argile.

28. Utilisation selon les revendications 1 à 23 en tant qu'entraîneur d'air pour le mortier ou le béton.

29. Utilisation selon les revendications 1 à 23 en tant que retardateur de solidification pour le mortier ou le béton.

30. Utilisation selon les revendications 1 à 23 en tant qu'agent de rétention pour des systèmes aqueux.
